# EUROPÄISCHE PATENTANMELDUNG

(11) **EP 0 769 668 A2**
(43) Veröffentlichungstag der Anmeldung: **23.04.1997**
(21) Anmeldenummer: 96115897.9
(22) Anmeldetag: 04.10.1996
(51) Int. Cl.: F25J 3/08

(54) **Verfahren und Anlage zum Aufbereiten von stickstoffhaltigem Erdgas**

(30) Priorität: 17.10.1995 DE 19538614
(71) Anmelder: DSD Dillinger Stahlbau GmbH, 61169 Friedberg (DE)
(72) Erfinder: Hobler, Alois, 61203 Reichelsheim (DE); Stumpf, Wolfgang, Dipl.-Ing., 61194 Niddatal (DE); Quasnitschka, Herbert, Ing. (grad.), 61167 Friedberg (DE); Kriebel, Manfred, Dr.-Ing., 60596 Frankfurt (DE)
(74) Vertreter: Zapfe, Hans, Dipl.-Ing.

(57) **Zusammenfassung**

Bei einem Verfahren zum Aufbereiten von hochstickstoffhaltigem Erdgas, das Gehalte an Schwefel und höheren Kohlenwasserstoffen aufweist, wird das Erdgas durch mindestens eine Einrichtung (2, 3, 22) zur Druckabsenkung geleitet. Um derartiges Erdgas wirtschaftlich aufbereiten und einsetzen zu können, wird das Erdgas in einer ersten Expansionsmaschine (3) mit Generator (7) auf einen Druck zwischen 60 und 100 bar entspannt. Anschließend wird das Gas einer Niedertemperaturbehandlung zur Abscheidung von Kohlenwasserstoffen mit mindestens 5 C-Atomen zugeführt und danach einer Sauergas-Reinigungsstufe (10) zur Entfernung von C0₂ und sauren Schwefelkomponenten zugeführt. Nach einer Zwischenabkühlung wird das Gas mindestens einer weiteren Reinigungsstufe (18, 20) zum Abtrennen mindestens eines Stoffes aus der Gruppe Sauergasverbindungen, C0₂, H₂0 und von restlichen Kohlenwasserstoffen mit mindestens 6 C-Atomen zugeführt. Schließlich wird das Gas in einer zweiten Expansionsmaschine (22) mit Generator (23) auf einen Druck zwischen 20 und 60 bar entspannt. Zur Erzeugung von H-Gas wird das Gas im Anschluß an die zweite Expansionsmaschine (22) einem Cryogen-Separator (24) zur Abtrennung des Stickstoffs vom Methan zugeführt.

## Beschreibung

Die Erfindung betrifft ein Verfahren zum Aufbereiten von stickstoffhaltigem Erdgas, insbesondere mit Stickstoffgehalten von 20 bis 90 Mol-Prozent, und Gehalten an höheren Kohlenwasserstoffen, wobei das Erdgas durch mindestens eine Einrichtung zur Druckabsenkung und durch Reinigungsstufen zur Abscheidung von Wasser, Kohlenwasserstoffen mit mindestens 5 Kohlenstoffatomen und von C0₂ und zwecks Abkühlung durch mindestens einen Wärmetauscher geleitet wird, bevor es in einem Cryogen-Separator in Stickstoff und restliche Kohlenwasserstoffe zerlegt wird, wobei die restlichen Kohlenwasserstoffe zwecks eigener Erwärmung und Abkühlung des Erdgases zum Wärmetauscher zurückgeführt werden.

Durch den Aufsatz von Kaast/Schlemm "Bau und Betrieb der Stickstoffentzugsanlage Clenze", Erdöl-Erdgas-Zeitschrift/The Oil and Gas Magazine, 93. Jahrgang 1977, Heft 6, Seiten 197-204, ist es bekannt, Erdgas mit einem Druck von 105 bar und Stickstoffanteilen von 56 bis 72 % sowie mit Quecksilber, aber ohne Schwefelverbindungen, durch eine Reihenschaltung von Absorbern, Cryogen-Separator und eine Rückführung von Produktgas über einen Wärmetauscher aufzuarbeiten, wobei die Rückführung dazu dient, das noch stickstoffhaltige Erdgas vor dem Cryogen-Separator auf -105 °C abzukühlen und das stickstoffreie Produktgas auf 35 °C bei 70 bar zu erwärmen. Über einen parallelen Wärmetauscher wird auch der Hauptstrom des abgetrennten Stickstoffs geführt und bei etwa 2,0 bar(a) auf 18 °C erwärmt. Eine Teilmenge des abgetrennten Stickstoffs wird im Nebenstrom in einer Expansionsturbine von 28 bar auf 1 bar entspannt und nach Wiedervereinigung mit dem Hauptstrom des Gases über einen weiteren Wärmetauscher geleitet, um das Produktgas abzukühlen und den Stickstoff zu erwärmen. Die Entspannung der Teilmenge des Stickstoffs hinter dem Cryogen-Separator von 28 auf 1 bar dient nur zum Ausgleich der Kältebilanz, d.h., die Expansionsturbine dient in erster Linie als Kältemaschine für die cryogene Separation. Die restliche Kälte wird über Drosselventile erzeugt. Die Anlage hat einen hohen Bedarf an externer Energie und ist nicht imstande, elektrische Energie abzugeben.

Erdgase mit hohen Stickstoffgehalten haben einen niedrigen Heizwert, und ihre Aufbereitung ist hauptsächlich aus diesem Grunde energetisch ungünstig. Andererseits wohnt dem Erdgas aufgrund seines hohen Drucks ein hohes Energiepotential inne.

Außerdem enthält Erdgas eine ganze Reihe von Begleitstoffen, die bei der Aufbereitung Schwierigkeiten verursachen, teilweise aber auch ohne besondere Maßnahmen zu einer Umweltschädigung führen.

Für hochstickstoffhaltige Gas, die neben einer Palette von Kohlenwasserstoffen von C₁ bis C₃₀ zusammen mit sauren Komponenten wie C0₂, H₂S und schwierig zu entfernende organische Schwefelverbindungen der Mercaphtanhomologen CH₃SH bis C₅H₁₁SH und höhere RSH enthalten, fehlte bisher eine Technologie, die eine wirtschaftliche Aufbereitung derartiger Erdgase darstellt.

Die Analyse eines typischen Erdgases mit hohem Stickstoffgehalt und hohen Schwefelgehalten wird nachstehend wiedergegeben:

### Gasanalyse

### Initiale Gaszusammensetzung bei P_{L} = 473 bar, T_{L} = 82 °C

P_{L} und T_{L} = Werte am geschlossenen Sondenkopf.

| Komponente | Mol-% |
|---|---|
| H₂S | 0,53 |
| C0₂ | 5,00 |
| N₂ | 56,04 |
| C₁ | 33,07 |
| C₂ | 1,56 |
| C₃ | 1,15 |
| C₄ bis C₅ | 1,25 |
| C₆ | 0,41 |
| C₇ | 0,34 |
| C₈ | 0,26 |
| C₉ | 0,16 |
| C₁₀ | 0,10 |
| C₁₁ | 0,05 |
| C₁₂ | 0,03 |
| C₁₃ | 0,02 |
| C₁₄ | 0,02 |
| C₁₅ | 0,007 |
| C₁₆ | 0,003 |
| Summe | 100,00 |

Das Gas ist wasserdampfgesättigt.

| Schwefelkomponenten | Mol-% | mg/m3(Vn) |
|---|---|---|
| COS | 0,0096 - 0,015 | 260 - 405 |
| CS₂ | 0,00022- 0,001 | 7,5 - 34 |
| CH₃SH | 0,0023 - 0,0075 | 53 - 160 |
| C₂H₅SH | 0,0047 - 0,008 | 130 - 221 |
| C₃H₇SH | 0,0070 - 0,008 | 237 - 312 |
| C₄H₉SH | 0,0049 | 197 |
| C₅H₁₁SH | 0,0021 | 98 |
| höhere RSH | 0,0026 | 137 |

Der Schwefelwasserstoffgehalt kann bei anderen Erdgaszusammensetzungen bis 10 Mol-% betragen, der Kohlendioxidgehalt bis 20 Mol-%, der Stickstoffgehalt zwischen 20 und 90 Mol-% und der Gehalt an Methan zwischen 10 und 60 Mol-%.

Der Erfindung liegt daher die Aufgabe zugrunde, Erdgas mit einem Stickstoffanteil zwischen 20 und 90 Mol-% wirtschaftlich aufzubereiten und hierbei ein Endprodukt zu erhalten, dessen umweltschädliche Bestandteile unter den vorgegebenen Grenzwerten liegen.

Die Lösung der gestellten Aufgabe erfolgt bei dem eingangs angegebenen Verfahren erfindungsgemäß dadurch, daß
a) die Gesamtmenge des Erdgases mit Gehalten an Schwefel in einer ersten Expansionsmaschine mit Generator auf einen Druck zwischen 60 und 100 bar, vorzugsweise zwischen 70 und 90 bar, entspannt wird,
b) das Gas anschließend einer Niedertemperaturbehandlung zur Abscheidung der Kohlenwasserstoffe mit mindestens 5 Kohlenstoffatomen zugeführt wird,
c) das Gas nach einer Zwischenerwärmung einer Sauergas-Reinigungsstufe zur Entfernung von C0₂ und sauren Schwefelkomponenten zugeführt wird,
d) das Gas nach einer Zwischenabkühlung in einem der Wärmetauscher mindestens einer weiteren Reinigungsstufe zum Abtrennen mindestens eines Stoffes aus der Gruppe Sauergasverbindungen, C0₂, H₂0 und von restlichen Kohlenwasserstoffen mit mindestens 6 Kohlenstoffatomen zugeführt wird, und
e) die Gesamtmenge des verbliebenen Gases anschließend in einer zweiten Expansionsmaschine mit Generator auf einen Druck zwischen 20 und 60 bar, vorzugsweise zwischen 30 und 50 bar, entspannt wird, bevor es dem Cryogen-Separator zur Trennung in restliche Kohlenwasserstoffe und Stickstoff zugeführt wird.

Ein solches Verfahren, bei dem beide Expansionsmaschinen im Hauptstrom des Erdgases liegen, ermöglicht durch die zugehörigen Generatoren die Erzeugung großer Mengen an Elektrizität und ist energetisch autark. Gegebenenfalls kann sogar noch elektrische Energie an das Stromnetz abgegeben werden.

Darin liegt ein ganz wesentlicher Anreiz, durch Sauergas verunreinigte Erdgase mit einer energetisch geringen Qualität und dem Erfordernis einer komplizierten Gasaufbereitung wirtschaftlich zu verwerten.

Die Analyse eines solchermaßen gewonnenen Gases, das auf die Qualität von sogenanntem H-Gas eingestellt werden kann, ist nachstehend angegeben:

### Gasanalyse

| Komponente | Mol-% |
|---|---|
| N₂ | 5,662 |
| C₁ | 87,151 |
| C₂ | 3,742 |
| C₃ | 2,270 |
| C₄ bis C₅ | 1,134 |
| C₆ | 0,040 |
| Summe | 100,00 |

| Schwefelkomponenten | Mol-% | mg/m³ |
|---|---|---|
| H₂S | 0,00033 | 3,3 |
| COS | 0,0041 | 41,0 |
| R-S-H | 0,00028 | 2,8 |

| | | |
|---|---|---|
| H-Gas-Rate: | 15.000 - 20.000 | m³(Vn)/h |
| Relative Dichte: | 0,639 | |
| Molekulargewicht: | 18,463 | kg/kmol |
| Abgabedruck (H-Gas): | 15 - 25 | bar(a) |
| Heizwert Hᵤ (H-Gas): | 10,376 | kWh/m³(Vn) |
| Wobbe-Index (Wo): | 14,348 | kWh/m³(Vn) |
| Wasserdampftaupunkt: | | 0 °C über gesamten |
| | Druckbereich von 0 - 80 bar(a) | |

In diesem Falle wurde dem Erdgas der allergrößte Teil des Stickstoffs entzogen, und das Endprodukt hat einen entsprechend hohen Heizwert, der es für die Einspeisung in vorhandene Leitungsnetze geeignet macht.

Der Cryogen-Separator trennt von den Erdgaskomponenten C₁ bis C₅ sehr weitgehend den Stickstoff ab. Dieser wird zweckmäßig in einem Pufferbehälter komprimiert und kann für die nachstehend noch näher beschriebenen Zwecke verwendet werden, zusätzlich auch als Instrumenten-Steuergas innerhalb der Anlage. Die prozeßmäßige Nutzung des Stickstoffs, der normalerweise in Erdgasen nur Ballast darstellt, weil er keinen Heizwert besitzt und die Fördersysteme unnötig vergrößert, ist ein ganz wesentlicher Vorteil des erfindungsgemäßen Verfahrens und macht letztlich die bisher unwirtschaftliche Förderungen solcher Erdgase energetisch wirtschaftlich. Die abgetrennten Komponenten C₁ bis C₆ werden als sogenanntes "H-Gas" in vorhandene Leitungsnetze eingespeist.

Weitere vorteilhafte Ausgestaltungen des erfindungsgemäßen Verfahrens ergeben sich aus den übrigen Verfahrensansprüchen.

Die Erfindung betrifft auch eine Anlage zum Aufbereiten von stickstoffhaltigem Erdgas, insbesondere mit Stickstoffgehalten von 20 bis 90 Mol-Prozent, mit Gehalten an Schwefel und höheren Kohlenwasserstoffen.

Zur Lösung der gleichen Aufgabe ist eine solche Anlage erfindungsgemäße gekennzeichnet durch eine Reihenschaltung
a) einer erstem im Hauptstrom liegenden Entspannungsmaschine mit Generator zur Stromgewinnung und zur Entspannung des Gases,
b) eines Niedertemperaturabscheiders zum Abtrennen eines Teils der höheren Kohlenwasserstoffe,
c) einer Sauergas-Reinigungsstufe zum Abtrennen von sauren Schwefelkomponenten und C0₂,
d) eines Wärmetauschers zur Zwischenabkühlung des teilentspannten Gases,
e) einer Reinigungsstufe zum Abtrennen von Stoffen aus der Gruppe Schwefelverbindungen, C0₂ und H₂0,
f) einer weiteren Reinigungsstufe zum Abtrennen von Kohlenwasserstoffen mit mindestens 6 Kohlenstoffatomen,
g) einer im Hauptstrom liegenden zweiten Expansionsmaschine mit Generator zur Stromgewinnung und zur weiteren Entspannung des Gases, und
h) eines Cryogen-Separators zur Trennung des Stickstoffs und der restlichen Kohlenwasserstoffe.

Weitere vorteilhafte Ausgestaltungen der erfindungsgemäßen Anlage ergeben sich aus den übrigen Vorrichtungsansprüchen.

Ein Ausführungsbeispiel des Erfindungsgegenstandes wird nachfolgend anhand der Figuren 1 bis 3 näher erläutert.

Es zeigen:
- Figur 1: ein Verfahrensschema einer vollständigen Anlage,
- Figur 2: ein Fließbild über den Stoff- und Energietransport einer Anlage zur Erzeugung von Sondergas für Kraftwerke und
- Figur 3: ein Fließbild über den Stoff- und Energietransport einer Anlage zur Erzeugung von H-Gas für Erdgasnetze.

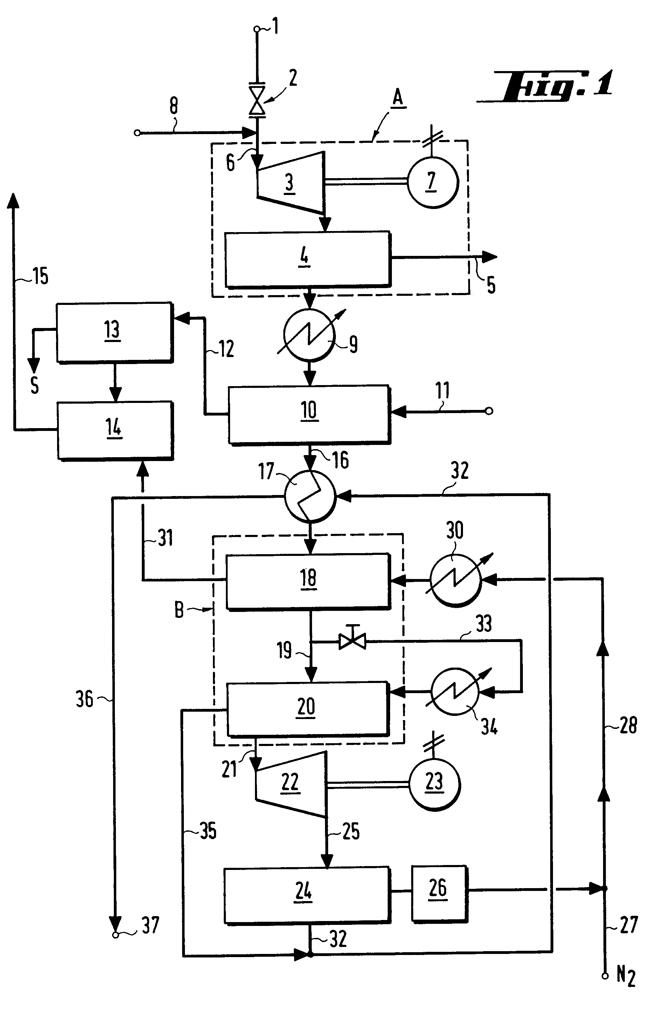

In Figur 1 erfolgt die Rohgas-Einspeisung an einem Sondenkopf 1, an dem das Erdgas unter einem sehr hohen Fließdruck steht, der zwischen 230 und 350 bar liegen kann. Bei geschlossenem Sondenkopf liegt der sogenannte Fließdruck noch wesentlich darüber, beispielsweise in der Größenordnung von 473 bar bei einer Temperatur von 82°C. Das Rohgas wird in einer Drosselstelle 2 isenthalp auf einen Druck zwischen 200 und 250 bar entspannt, wobei es durch den Joule-Thomson-Effekt entsprechend stark abkühlt. Bei einer Entspannung auf 230 bar erfolgt beispielhaft eine Abkühlung auf -20 °C.

Das Gas wird nunmehr über eine Leitung 6 einer ersten Expansionsmaschine 3 zugeführt, die vorzugsweise als Expansionsturbine ausgeführt ist und einen Generator 7 für die Stromerzeugung antreibt. Um ein Ausfrieren der vorhandenen Wasserkomponente bei den tiefen Temperaturen zu vermeiden, wird in die Leitung 6 über eine Leitung 8 ein Hydratinhibitor eingedüst, beispielsweise Glykol. Bei einer Gasmenge von 45000 Normalkubikmetern und einer Druckdifferenz von 150 bar erzeugt der Generator 7 eine elektrische Leistung von etwa 880 kW. Dies ist eine außerordentlich große Energiemenge, die nutzbringend eingesetzt werden kann. Mit anderen Worten: allein das Druckpotential des Erdgases führt zu einer deutlichen Erhöhung des Wirkungsgrades innerhalb der gesamten Prozeßroute. Die polytrope Entspannung in der Expansionsmaschine 3 führt zu Temperaturen zwischen etwa -20 bis -30 °C.

In diesem Zustand gelangt das Erdgas in einen Niedertemperaturabscheider 4, in dem die höheren Kohlenwasserstoffe C₅ bis C₃₀ durch partielle Kondensation bei tiefen Temperaturen, vorzugsweise zwischen -20 °C und-30 °C abgetrennt und über eine Leitung 5 aus dem Prozeß abgeführt werden. Die betreffenden Kohlenwasserstoffe enthalten noch zum Teil physikalisch gelöste organische Schwefelverbindungen, können aber in einer normalen Raffinerie weiter verarbeitet werden.

Der Niedertemperaturabscheider 4 und die Expansionsmaschine 3 bilden ein in sich geschlossenes Aggregat A, das durch eine gestrichelte Umrandung angedeutet ist. Durch die bereits beschriebene polytrope Entspannung in der Expansionsmaschine erfolgt eine Temperaturabsenkung bis in den Bereich von -20 bis -30 °C, die in Verknüpfung mit der Gasaufbereitung in dem Niedertemperaturabscheider 4 sehr sinnvoll ausgenutzt werden kann. Das gebildete Glykol-Wassergemisch wird nach der Entspannung abgezogen und unter Wasserentzug in einem Regenerator aufgearbeitet.

Beim dargestellten Ausführungsbeispiel tritt das Gas aus der Expansionsmaschine 3 mit einem Druck von 80 bar und einer Temperatur von -20 °C aus. In einem dampfbeheizten Wärmetauscher 9 wird das Gas wieder auf eine Temperatur zwischen 5 und 15 °C erwärmt und tritt in diesem Zustand in einer Sauergas-Reinigungsstufe 10 ein, in der die sauren Bestandteile C0₂, H₂S und RSH durch chemische und/oder physikalische Lösungsmittel entfernt werden. Hierfür eignen sich chemisch wirkende Waschprozesse mit wässrigen Lösungen mit sekundären und tertiären Aminen wie Isopropanolamin, Methyldiethylanolamin oder Flexsorb-Amin oder physikalisch wirkende Waschprozesse mit den Lösungsmitteln Methanol, N-Methylpyrolidon oder Dimethylätherpolyethylenglycol. Die betreffenden Reinigungsmittel werden über eine Leitung 11 zugeführt.

Die abgetrennten Komponenten C0₂, H₂S und RSH werden über eine Leitung 12 einer Schwefelgewinnungsanlage 13 zugeführt. Für die Rückgewinnung des Schwefels in zunächst geschmolzenem Zustand eignen sich vorzugsweise die bekannten und bewährten Claus-Prozesse mit thermischen und/oder katalytischen Stufen in Kombination mit Hydrierstufen und Tailgas-Reinigungsstufen, wie z.B. Selectox, Scott oder Sulfreen, um den Restausstoß an S0₂ zu eliminieren und die gesetzlichen Umweltauflagen zu erfüllen. Die Tailgas-Abgase werden in einem Verbrennungsofen 14 verbrannt, dessen Abgase über einen Kamin 15 gereinigt an die Atmosphäre entlassen werden.

Aus der Sauergas-Reinigungsstufe 10 wird das Gas mit einem Druck von 78,5 bar und einer Temperatur von 40 °C über eine Leitung 16 einem Wärmetauscher 17 zugeführt und darin auf eine Temperatur zwischen 15 und 30 °C abgekühlt. In diesem Zustand gelangt das Gas in eine Reinigungsstufe 18 zur Abtrennung von weiteren Komponenten aus der Gruppe RSH, C0₂ und H₂0. Dies geschieht auf adsorptivem Wege, und zwar vorteilhaft mit Molekularsieben (Zeolithen) oder dergleichen. Wiederum nachfolgend wird das Gas über eine Leitung 19 einer weiteren Reinigungsstufe 20 zugeführt, in der höherwertige Kohlenwasserstoffe mit mindestens 6 C-Atomen adsorbiert werden, vorzugsweise an adsorptiven Trockenmitteln oder an Aktivkohle. Bis zum Ausgang der Reinigungsstufe 20 befindet sich das Gas noch auf einem Druckniveau zwischen 60 und 90 bar. Die Reinigungsstufen 18 und 20 werden jeweils vorzugsweise in 2-Adsorber-Fahrweise betrieben, was in Figur 1 nicht näher dargestellt ist. Die paarweise vorhandenen Reinigungsstufen 18 und 20 werden jeweils alternierend betrieben: Während jeweils in der einen Reinigungsstufe die Adsorption stattfindet, wird in der jeweils anderen Reinigungsstufe eine Regeneration bzw. Desorption durchgeführt, und zwar die Reinigungsstufe 18 mittels erhitztem Stickstoff, und die Reinigungsstufe 20 mittels erhitztem Erdgas, was nachstehend noch näher erläutert wird.

Über eine Zweigleitung 33 wird eine geringe Teilmenge des Hauptgases aus der von der Reinigungsstufe 18 kommenden Leitung 19 entnommen und über einen dampfbeheizten Erhitzer 34 zur paarweise vorhandenen Reinigungsstufe 20 geführt, um dort in den Regenerationsintervallen die C₆₊-Komponenten zu adsorbieren bzw. zu desorbieren und von dort über eine Leitung 35 in eine Leitung 32 nach einer zweiten Expansionsmaschine 22 einzuspeisen. Durch die annähernd vollständige Abtrennung der C₆₊-Komponenten in der Reinigungsstufe 20 wird eine Störung des Trennprozesses in einem Cryogen-Separator 24 vermieden. Die Reinigungsstufen 18 und 20 können zu einem Block B (gestrichelt) zusammengefaßt werden.

Um in den kritischen Druck-/Temperaturbereich des Gemisches zu gelangen und eine Verflüssigung der Kohlenwasserstoffe für eine Tieftemperatur-Trennung zu erreichen, muß das Gas auf einen niedrigeren Druck entspannt werden, vorzugsweise je nach Zusammensetzung auf einen Druck zwischen 30 und 50 bar. Zu diesem Zweck wird das nunmehr sehr weitgehend gereinigte Gas über eine Leitung 21 der zweiten Expansionsmaschine 22 zugeführt, die vorteilhaft gleichfalls als Expansionsturbine ausgebildet und mit einem Generator 23 für die Stromerzeugung verbunden ist. Bei der oben angegebenen Gasmenge und einer Druckabsenkung von 78 auf 50 bar liefert der Generator 23 eine Leistung von beispielhaft 450 kW, die in Addition zur Leistung des Generators 7 zu sehen ist. Bei einem Ausgangsdruck der Expansionsmaschine 22 von etwa 50 bar entsteht eine Temperatur zwischen 0 und -5 °C, die auch am Eingang des Cryogen-Separators 24 über eine Leitung 25 ansteht. Die niedrige Austrittstemperatur des Gases aus der Expansionsmaschine 22 ist eine vorteilhafte Voraussetzung für die Wirkung des Cryogen-Separators 24. In diesem erfolgt eine vollständige Kondensation aller Gase jeweils im kritischen Druck-Temperaturbereich und eine nachfolgende Destillation unter Zerlegung in Stickstoff einerseits und die restlichen niederen Kohlenwasserstoffe C₁ bis C₅ andererseits. Der Stickstoff wird bedarfsweise in einem Pufferbehälter 26 komprimiert und als Instrumenten-Steuergas, Spül- und Inertisierung-Medium zum Teil für die Prozeßanlage selbst genutzt, was nachstehend näher beschrieben wird.

Der Stickstoff dient zugleich auch als Desorptionsmittel für die adsorptive Reinigungsstufe 18. Ein geringer Teil des Stickstoffs wird als Spülgas für die Fackelanlage benutzt und gelangt danach in die Atmosphäre.

Ein Teil des Stickstoffs kann über eine Leitung 27 abgezogen werden. Dieser Stickstoff ist von einer außerordentlich hohen Reinheit, so daß er sogar in der Chip-Fertigung nutzbringend verwendet werden kann. Der übrige Teil des Stickstoffs wird über eine Leitung 28 und einen dampfbeheizten Erhitzer 30 jeweils einer der beiden Reinigungsstufen 18 zur Regenerierung bzw. Desorption zugeleitet. Der mit den desorbierten Gasen und Dämpfen verunreinigte Stickstoff wird danach über eine Leitung 31 dem Verbrennungsofen 14 zugeführt.

Vom Cryogen-Separator 24 mit einer Ausgangstemperatur des H-Gases von 10 bis 15 °C führt eine Rückführungsleitung 32 für die Hauptgasmenge in den Prozeß zurück. Die Rückführungsleitung 32 führt dann zu dem bereits beschriebenen Wärmetauscher 17, in dem das H-Gas vom Hauptgasstrom von 10 bis 15 °C auf 25 bis 30 °C erwärmt wird. Der Hauptgasstrom wird dadurch andererseits auf die Eintrittsbedingungen der Reinigungsstufe 18 vorgekühlt. Das H-Gas steht jetzt über die Leitung 36 mit einem Druck zwischen 10 und 30 bar an einer Einspeisungsstelle 37 für das Leitungsnetz an.

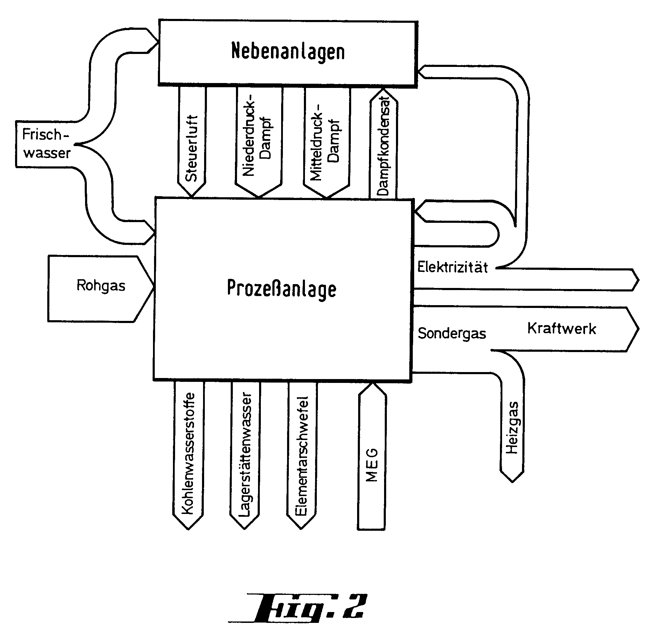

Bei dem Verfahrensschema nach Figur 2 werden stündlich 60.000 Normalkubikmeter Rohgas mit einem unteren Heizwert Hᵤ = 5,46 kW/m³(Vn) aufbereitet. Nach außen abgegeben werden - jeweils stündlich - 55.800 Normalkubikmeter Sondergas mit Stickstoff und einem unteren Heizwert Hᵤ = 4,2 kW/m³/Vn) eine elektrische Leistung von 670 kW, 4.200 Normalkubikmeter Heizgas mit einem Hᵤ von 4,2 kW/m³(Vn), 3.900 kg Kohlenwasserstoffe und 549 kg Elementarschwefel.

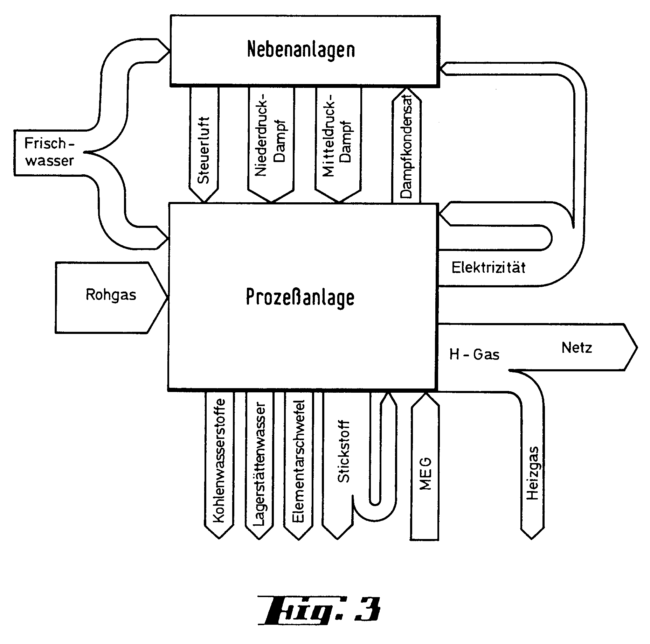

Bei dem Verfahrensschema nach Figur 3 werden stündlich 45.000 Normalkubikmeter Rohgas mit dem gleichen unteren Heizwert aufbereitet. Nach außen abgegeben werden - jeweils stündlich - ca. 17.100 Normalkubikmeter H-Gas mit einem unteren Heizwert Hᵤ = 11,0 kW/m³(Vn), 1.425 Normalkubikmeter Heizgas mit dem gleichen unteren Heizwert, 2.370 kg Kohlenwasserstoffe und 361 kg Elementarschwefel.

## Patentansprüche

1. Verfahren zum Aufbereiten von stickstoffhaltigem Erdgas, insbesondere mit Stickstoffgehalten von 20 bis 90 Mol-Prozent und Gehalten an höheren Kohlenwasserstoffen, wobei das Erdgas durch mindestens eine Einrichtung (2, 3, 22) zur Druckabsenkung und durch Reinigungsstufen (10, 18, 20) zur Abscheidung von Wasser, Kohlenwasserstoffen mit mindestens 5 Kohlenstoffatomen und von C0₂ und zwecks Abkühlung durch mindestens einen Wärmetauscher (17) geleitet wird, bevor es in einem Cryogen-Separator (24) in Stickstoff und restliche Kohlenwasserstoffe zerlegt wird, wobei die restlichen Kohlenwasserstoffe zwecks eigener Erwärmung und Abkühlung des Erdgases zum Wärmetauscher (17) zurückgeführt werden, **dadurch gekennzeichnet**, daß
a) die Gesamtmenge des Erdgases mit Gehalten an Schwefel in einer ersten Expansionsmaschine (3) mit Generator (7) auf einen Druck zwischen 60 und 100 bar, vorzugsweise zwischen 70 und 90 bar, entspannt wird,
b) das Gas anschließend einer Niedertemperaturbehandlung zur Abscheidung der Kohlenwasserstoffe mit mindestens 5 Kohlenstoffatomen zugeführt wird,
c) das Gas nach einer Zwischenerwärmung einer Sauergas-Reinigungsstufe (10) zur Entfernung von C0₂ und sauren Schwefelkomponenten zugeführt wird,
d) das Gas nach einer Zwischenabkühlung in einem der Wärmetauscher (17) mindestens einer weiteren Reinigungsstufe (18, 20) zum Abtrennen mindestens eines Stoffes aus der Gruppe Sauergasverbindungen, C0₂, H₂0 und von restlichen Kohlenwasserstoffen mit mindestens 6 Kohlenstoffatomen zugeführt wird, und
e) die Gesamtmenge des verbliebenen Gases anschließend in einer zweiten Expansionsmaschine (22) mit Generator (23) auf einen Druck zwischen 20 und 60 bar, vorzugsweise zwischen 30 und 50 bar, entspannt wird, bevor es dem Cryogen-Separator (24) zur Trennung in restliche Kohlenwasserstoffe und Stickstoff zugeführt wird.

2. Verfahren nach Anspruch 1, **dadurch gekennzeichnet**, daß der Stickstoff im Cryogen-Separator (24) bis auf einen Restgehalt von maximal 15, vorzugsweise von maximal 6 Volumensprozent, entfernt wird.

3. Verfahren nach Anspruch 1, **dadurch gekennzeichnet**, daß die hinter der ersten Expansionsmaschine (3) vorhandene Sauergase in einem flüssigen Absorptionsmittel absorbiert, das beladene Absorptionsmittel regeneriert und das Desorptionsgas einer Schwefelgewinnungsanlage (13) zugeführt werden.

4. Verfahren nach Anspruch 3, **dadurch gekennzeichnet**, daß als flüssige Absorptionsmittel Stoffe aus der Gruppe sekundäre oder tertiäre Amine ausgewählt werden.

5. Verfahren nach Anspruch 1, **dadurch gekennzeichnet**, daß das Abtrennen mindestens eines Stoffes aus der Gruppe Schwefelverbindungen, C0₂ und H₂0 adsorptiv mittels eines Stoffes aus der Gruppe Molekularsiebe und Zeolithe durchgeführt wird, und daß diese Stoffe alternierend durch aufgeheizten Stickstoff aus dem Cryogen-Separator (24) regeneriert werden, der zusammen mit den Schadstoffen einem Verbrennungsofen (14) zugeführt wird.

6. Verfahren nach Anspruch 1, **dadurch gekennzeichnet**, daß das Abtrennen der restlichen Kohlenwasserstoffe mit mindestens 6 Kohlenstoffatomen vor dem Eintritt des Gases in die zweite Expansionsmaschine (22) an Adsorptionsmittel aus der Gruppe adsorptiver Trockenmittel und Aktivkohle erfolgt, und daß die Adsorptionsmittel alternierend durch aufgeheiztes Gas aus der Reinigungsstufe (18) regeneriert werden, das von den aufgenommenen Kohlenwasserstoffen getrennt und dem Gas vor der Reinigungsstufe (20) wieder zugeführt wird.

7. Verfahren nach Anspruch 2, **dadurch gekennzeichnet**, daß das bereits weitgehend gereinigte Gas im Cryogen-Separator vollständig verflüssigt und anschließend durch Destillation in Methan und Stickstoff zerlegt wird, der nach Verdichtung teilweise als Prozeßgas wieder verwendet wird.

8. Anlage zum Aufbereiten von stickstoffhaltigem Erdgas, insbesondere mit Stickstoffgehalten von 20 bis 90 Mol-Prozent, mit Gehalten an Schwefel und höheren Kohlenwasserstoffen, **gekennzeichnet durch** eine Reihenschaltung
a) einer ersten im Hauptstrom liegenden Entspannungsmaschine (3) mit Generator (7) zur Stromgewinnung und zur Entspannung des Gases,
b) eines Niedertemperaturabscheiders (4) zum Abtrennen eines Teils der höheren Kohlenwasserstoffe,
c) einer Sauergas-Reinigungsstufe (10) zum Abtrennen von sauren Schwefelkomponenten und C0₂,
d) eines Wärmetauschers (17) zur Zwischenabkühlung des teilentspannten Gases,
e) einer Reinigungsstufe (18) zum Abtrennen von Stoffen aus der Gruppe Schwefelverbindungen, C0₂ und H₂0,
f) einer weiteren Reinigungsstufe (20) zum Abtrennen von Kohlenwasserstoffen mit mindestens 6 Kohlenstoffatomen,
g) einer im Hauptstrom liegenden zweiten Expansionsmaschine (22) mit Generator (23) zur Stromgewinnung und zur weiteren Entspannung des Gases, und
h) eines Cryogen-Separators (24) zur Trennung des Stickstoffs und der restlichen Kohlenwasserstoffe.

9. Anlage nach Anspruch 8, **dadurch gekennzeichnet**, daß der Cryogen-Separator (24) zwecks Abkühlung des Hauptgasstroms über eine zweite Rückführungsleitung (32) für die abgetrennten Kohlenwasserstoffe mit dem zwischen den Expansionsmaschinen (3, 22) angeordneten Wärmetauscher (17) verbunden ist.

10. Anlage nach Anspruch 8, **dadurch gekennzeichnet**, daß der Sauergas-Reinigungsstufe (10) eine Schwefelgewinnungsanlage (13) nachgeschaltet ist.

11. Anlage nach Anspruch 9, **dadurch gekennzeichnet**, daß der Cryogen-Separator (24) über eine Stickstoffleitung (28) über einen Erhitzer (30) mit der Reinigungsstufe (18) zum Abtrennen von Stoffen aus der Gruppe Schwefelverbindungen, C0₂ und H₂0 verbunden ist.
